Europäisches Patentamt

European Patent Office

Office européen des brevets

(11) Veröffentlichungsnummer: **0 188 673**
**A2**

(12) # EUROPÄISCHE PATENTANMELDUNG

(21) Anmeldenummer: 85113487.4

(51) Int. Cl.⁴: **F 16 K 31/06**

(22) Anmeldetag: 24.10.85

(30) Priorität: 19.01.85 DE 3501708

(71) Anmelder: **WABCO Westinghouse Fahrzeugbremsen GmbH, Am Lindener Hafen 21 Postfach 91 12 80, D-3000 Hannover 91 (DE)**

(43) Veröffentlichungstag der Anmeldung: 30.07.86 Patentblatt 86/31

(72) Erfinder: **Rode, Konrad, Dipl.-Ing., An der Rotbuche 3, D-3016 Seelze 3 (DE)**

(74) Vertreter: **Schrödter, Manfred, WABCO Westinghouse Fahrzeugbremsen GmbH Am Lindener Hafen 21 Postfach 91 12 80, D-3000 Hannover 91 (DE)**

(84) Benannte Vertragsstaaten: DE FR GB IT

(54) Elektromagnetisch betätigbares Mehrwegeventil.

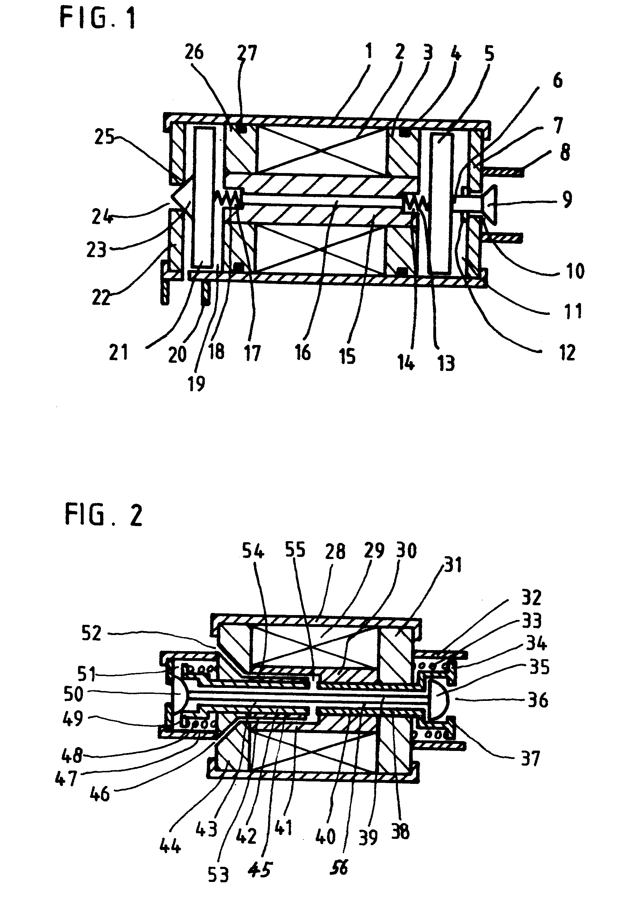

(57) Die Erfindung betrifft ein elektromagnetisch betätigbares Mehrwegeventil, welches gemäß Fig. 1 zwei einander gegenüberliegend angeordnete Ventile (9, 10, 23, 25) aufweist. Jedem der beiden Ventile ist ein Anker (5, 21) zugeordnet, welche mit einer zwischen den beiden Ventilen angeordneten Spule (2) zusammenwirken. Das eine der beiden Ventile ist gegen die Kraft einer ersten Feder (13) vom ersten Anker (5) und das andere der beiden Ventile ist gegen die Kraft einer zweiten Feder (18) vom zweiten Anker (21) betätigbar. Die beiden Federn (13, 18) sind so ausgelegt, daß unterschiedliche Magnetkräfte zur Betätigung der beiden Ventile erforderlich sind. Die unterschiedlichen Magnetkräfte werden durch Änderung des in der Spule (2) fließenden Stromes erzeugt.

Bedingt dadurch daß jedem Ventil ein separater Anker zugeornet ist, der von einer stromgesteuerten Spule betätigbar ist, wird eine voneinander unabhängige Betätigung der beiden Ventile ermöglicht.

0188673

Hannover, d. 17.1.1985
WP 9/85 Klose/H

WABCO Westinghouse Fahrzeugbremsen GmbH, Hannover

Elektromagnetisch betätigbares Mehrwegeventil

Die Erfindung betrifft ein elektromagnetisch betätigbares Mehrwegeventil gemäß dem Oberbegriff des Patentanspruchs 1.

Ein derartiges Mehrwegeventil ist aus der DE-OS 24 03 770
bekannt. Dieses bekannte elektromagnetisch betätigbare
Mehrwegeventil weist zwei in einem Ventilgehäuse einander gegenüberliegend angeordnete Ventilsitze auf, welche mit zwei zugeordneten Ventilkörpern zwei Ventile
bilden (Einlaßventil-Auslaßventil). Die beiden Ventile sind innerhalb eines Ankers gelegen, der im Gehäuse des Mehrwegeventils gegen eine Rückstellkraft axial verschiebbar angeordnet und von einer Spule umgeben ist. Als Rückstellkraft für den Anker dienen eine sich am Ventilgehäuse abstützende und direkt auf den Anker einwirkende erste Feder und eine zwischen den beiden Ventilkörpern angeordnete zweite Feder. Die zweite Feder hat dabei überwiegend die Funktion einer Spreizfeder, welche die beiden Ventilkörper gegensinnig beaufschlagt. Die erste Feder dagegen dient als Hauptfeder, deren Kraft bei erregter Spule von der auf den Anker einwirkenden Magnetkraft zu überwinden ist. Im Anker ist ein Träger für die beiden Ventilkörper angeordnet. Der Träger ist so ausgebildet, daß die beiden Ventilkörper um einen vorbestimmten Weg in axialer Richtung in ihren am Träger angeordneten Lagerstellen bewegbar sind.

Bei stromloser Spule befindet sich das Einlaßventil in der Offenstellung und das Auslaßventil in der Schließstellung. Wird die Spule mit einem Teilstrom beschickt, so wird der Anker gegen die Kraft der ersten Feder in Richtung auf den Einlaßventilsitz zubewegt. Der von der zweiten Feder beaufschlagte Einlaßventilkörper setzt auf den Einlaßventilsitz auf. Das Einlaßventil ist jetzt geschlossen. Das Auslaßventil bleibt aufgrund der Kraft der den Auslaßventilkörper beaufschlagenden zweiten Feder noch geschlossen. Wird der Strom in der Spule erhöht, so wird der Anker durch die jetzt stärkere Magnetkraft gegen die Kraft der ersten Feder weiter in Richtung auf den Einlaßventilsitz zubewegt. Der Auslaßventilkörper wird von dem gleichzeitig die Funktion eines Mitnehmers ausübenden Träger gegen die Kraft der zweiten Feder vom Auslaßventilsitz abgehoben.

Das Auslaßventil ist jetzt geöffnet und das Einlaßventil bleibt geschlossen.

Dieses bekannte stromgesteuerte elektromagnetisch betätigbare Mehrwegeventil hat den Nachteil, relativ kompliziert in seinem Aufbau zu sein. Da der Anker zur Betätigung beider Ventile (Einlaßventil-Auslaßventil) dient und zudem mit dem Träger für die Ventilkörper sowie mit den Ventilkörpern und der zweiten Feder eine Baueinheit bildet, weist er eine große zu beschleunigende Masse auf, was sich negativ auf das Schaltverhalten auswirkt (relativ große Schalthysterese). Zur Betätigung dieses Mehrwegeventils sind relativ große Magnetkräfte, das bedeutet auch relativ hohe Ströme, erforderlich.

Der Erfindung liegt deshalb die Aufgabe zugrunde, ein elektromagnetisch betätigbares Mehrwegeventil der eingangs erwähnten Art zu schaffen, welches einfach im Aufbau ist und sich schnell schalten läßt.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, ein elektromagnetisch betätigbares Mehrwegeventil zu erhalten, welches einfach im Aufbau ist und sich durch Reduzierung der Ankermasse sowie Verringerung des Ankerhubes sehr schnell schalten läßt. Da sowohl dem Einlaßventil als auch dem Auslaßventil je ein separater Anker zugeordnet ist, wobei jeder Anker mechanisch unabhängig vom jeweils anderen Anker zwei Positionen einnehmen kann, können Anker mit einer sehr geringen zu beschleunigenden Masse verwendet werden. Die zur Betätigung der Anker aufzubringenden Magnetkräfte und somit auch die erforderlichen Ströme können klein gehalten werden. Die Öffnungs- bzw. Schließkräfte eines jeden Ventils (Einlaßventil - Auslaßventil) lassen sich durch veränderbare Strompegel und entsprechend angepaßte Rückstellkräfte, wie z.B. Federn, dem jeweiligen Einsatzzweck anpassen.

Anhand der Zeichnung werden nachstehend zwei Ausführungsbeispiele der Erfindung näher erläutert.

Es zeigen:

Fig. 1 ein 3/2-Wegeventil mit zwei Ankern, die mittels einer stromgesteuerten Spule betätigbar sind und

Fig. 2 ein 3/2-Wegeventil für hydraulische Anlagen mit zwei Ankern, die mittels einer stromgesteuerten Spule betätigbar sind und welches mit einem Druckausgleich versehen ist.

In Fig. 1 ist ein 3/2-Wegeventil dargestellt, welches einen Druckmitteleingang 8, einen mit einem Verbraucher verbundenen Druckmittelausgang 20 und einen zur Atmosphäre hin führenden Druckmittelauslaß 24 aufweist. Handelt es sich um ein 3/2-Wegeventil, das in Hydraulikanlagen eingesetzt werden soll, so ist der Druckmittelauslaß 24 mit einem Rücklauf verbunden. Der Druckmitteleingang 8 und der Druckmittelauslaß 24 sind an einander gegenüberliegenden Deckeln 7 und 22 des Ventilgehäuses 1 angeordnet. Der zum Verbraucher führende Druckmittelausgang 20 ist an der Wandung des Gehäuses 1 vorgesehen. Im Ventilgehäuse 1 ist eine auf einem Spulenträger 15 gelagerte Spule 2 angeordnet. Die einander abgewandten Stirnseiten der Spule 2 werden von einer ersten Platte 3 und einer zweiten Platte 26 begrenzt, die aus einem ferromagnetischen Werkstoff bestehen und mit dem Spulenträger 15 verbunden sind.

Die mit dem Spulenträger 15 und den beiden Platten 3, 26 eine Baueinheit bildende Spule 2 ist so im Ventilgehäuse 1 angeordnet, daß die erste Platte 3 mit dem den Druckmitteleingang 8 aufweisenden Deckel 7 und der Ventilgehäusewandung eine als Druckmitteleingangskammer 11 dienende erste Kammer und die zweite Platte 26 mit dem den Druckmittelauslaß 24 aufweisenden Deckel 22 und der Ventilgehäusewandung eine als Druckmittelausgangskammer 19 dienende zweite Kammer begrenzt. Mittels auf dem Umfang der Platten 3, 26 angeordneten Dichtringen 4 und 27 ist die Spule 2 gegen die Druckmitteleingangskammer 11 und die Druckmittelausgangskammer 19 abgedichtet.

In Längsrichtung des Spulenträgers 15 verlaufend, ist im Spulenträger 15 ein Durchlaß 16 vorgesehen, der in beiden Endbereichen des Spulenträgers 15 je eine als Abstufung ausgebildete Erweiterung 14 bzw. 17 aufweist. Der den Druckmitteleingang 8 aufweisende Deckel 7 ist mit einem Durchlaß versehen, der als Einlaßventilsitz 10 ausgebildet ist. Ein erster Ventilkörper 9 steht über einen Ventilstößel 6 mit einem in der Druckmitteleingangskammer 11 angeordneten, vorzugsweise scheibenförmig ausgebildeten ersten Anker 5 in Verbindung. Der erste Ventilkörper 9 bildet mit dem Einlaßventilsitz 10 ein Einlaßventil 9, 10. Eine sich an der Abstufung 14 des im Spulenträger 15 vorgesehenen Durchlasses 16 abstützende erste Feder 13 beaufschlagt den ersten Anker 5 und somit auch den ersten Ventilkörper 9 in Öffnungsrichtung des Einlaßventils 9, 10. Am Ventilstößel 6 ist

0188673

ein als Hubbegrenzung für den Einlaßventilkörper 9 dienender Stift 12 angeordnet, der bei stromloser Spule 2 am Deckel 7 anliegt.

In der Druckmittelausgangskammer 19 ist ein vorzugsweise scheibenförmig ausgebildeter zweiter Anker 21 angeordnet, der an seiner der dem Druckmittelauslaß 24 zugewandten Seite einen Auslaßventilkörper 23 trägt. Der Auslaßventilkörper 23 bildet zusammen mit einem am Druckmittelauslaß 24 vorgesehenen Auslaßventilsitz 25 ein Auslaßventil 23, 25. Eine zweite Feder 18 stützt sich an der Abstufung 17 des im Spulenträger 15 vorgesehenen Durchlasses 16 ab und beaufschlagt den zweiten Anker 21 und somit den Auslaßventilkörper 23 in Schließrichtung des Auslaßventils 23, 25.

Die Spule 2 und somit auch der mit den Platten 3, 26 versehene Spulenträger 15 sind derart im Ventilgehäuse 1 befestigt, daß sie weder vom Druckmittel noch durch die Bewegung der beiden Anker 5, 21 verschiebbar sind. Die dem ersten Anker 5 zugeordnete Feder 13 und die dem zweiten Anker 21 zugeordnete Feder 18 sind unterschiedlich stark ausgelegt, so daß unterschiedliche Magnetkräfte zur Betätigung der beiden Ventile erforderlich sind.

Bei Beschickung der Spule 2 mit einem Teilstrom wird die Kraft der ersten Feder 13 von der auf den ersten Anker 5 ausgeübten Magnetkraft überwunden und so der mit dem Einlaßventilkörper 9 verbundene erste Anker 5 in Richtung auf dieerste Platte 3 der Spule 2 zubewegt, wodurch das Einlaßventil 9, 10 in die Schließstellung gelangt. Da die zweite Feder 18 stärker ausgelegt ist als die erste Feder 13, kann die auf den zweiten Anker 21 ausgeübte Magnetkraft die Kraft der zweiten Feder 18 nicht überwinden. Der mit dem zweiten Anker 21 verbundene Auslaßventilkörper 23 wird weiterhin auf dem Auslaßventilsitz 25 gehalten. Dies bedeutet, daß bei Beschicken der Spule 2 mit einem Teilstrom das Einlaßventil 9, 10 in die Schließstellung gelangt und das Auslaßventil 23, 25 noch geschlossen bleibt.

Soll das Auslaßventil 23, 25 in die Offenstellung gebracht werden, so wird der Strom in der Spule 2 erhöht. Die Magnetkraft wird jetzt so groß, daß sie die auf den zweiten Anker 21 entgegengerichtet einwirkende Kraft der zweiten Feder 18 ebenfalls überwindet und der zweite Anker 21 in Richtung auf die zweite Platte 26 zu bewegt wird. Der mit dem zweiten Anker 21 verbundene Auslaßventilkörper 23 wird von Auslaßventilsitz 25 abgehoben. Das Auslaßventil 23, 25 ist jetzt geöffnet, und das Einlaßventil 9, 10 bleibt weiterhin geschlossen.

Mit dem im vorstehenden beschriebenen elektromagnetisch betätigbaren Mehrwegeventil können z.B. beim Einsatz dieses Mehrwegeventils in einem Antiblockiersystem die folgenden Druckverläufe realisiert werden.
Druckeinsteuern: Die Spule 2 ist stromlos, das Einlaßventil 9, 10 ist geöffnet und das Auslaßventil 23, 25 ist geschlossen.
Druck halten: Die Spule wird mit einem Teilstrom beschickt, der erste Anker 5 bringt das Einlaßventil 9, 10 in die Schließstellung; der zweite Anker 21 wird noch nicht bewegt, so daß das Auslaßventil 23, 25 in der Schließstellung verbleibt.
Druckabbau: Der Strom in der Spule 2 wird erhöht, der zweite Anker wird durch die jetzt höhere Magnetkraft in Öffnungsrichtung des Auslaßventils 23, 25 bewegt und das Auslaßventil 23, 25 gelangt in die Offenstellung.
Das Einlaßventil 9, 10 verbleibt in der Schließstellung.

Der erste Anker 5 und der zweite Anker 21 sind so ausgebildet, daß sie im Ventilgehäuse 1 geführt werden und Durchlässe zum Durchtritt des Druckmittels aus der Druckmitteleingangskammer 11 über Durchlaß 16 des Spulenträgers 15 zur Druckmittelausgangskammer 19 hin bzw. von der Druckmittelausgangskammer 19 zum Druckmittelauslaß 24 hin aufweisen.

Es ist natürlich auch möglich, die Anker nicht scheibenförmig, sondern als rohrförmige Körper auszubilden, welche im Durchlaß 16 des Spulenträgers 15 geführt werden.

Figur 2 zeigt ein 3/2-Wegeventil, welches einen Druckmitteleingang 32, 36, zwei Druckmittelausgänge 46, 52, die mit Verbrauchern verbunden sind, und einen mit einem Rücklauf verbundenen Druckmittelauslaß 47, 51 aufweist. Der Druckmitteleingang 36, 32 und der Druckmittelauslaß 47, 51 sind an einander gegenüberliegenden Deckeln 31, 44 des Ventilgehäuses 28 angeordnet. Die zum Verbraucher führenden Druckmittelausgänge 46, 52 sind in dem dem Druckmittelauslaß 47, 51 zugeordneten Deckel 44 angeordnet. Im Ventilgehäuse 28 ist eine auf einem Spulenträger 30 gelagerte Spule 29 angeordnet. Die einander abgewandten Stirnseiten der Spule 29 werden von den beiden aus ferromagnetischem Werkstoff bestehenden Deckeln 31, 44 begrenzt. Der Spulenträger 30, die Spule 29 und die beiden Deckel 31, 44 bilden eine Baueinheit.

Der Spulenträger 30 weist einen in Richtung seiner Längsachse verlaufenden abgestuften Durchlaß 40, 41 auf. In den Teil 40 des Durchlasses 40, 41, welcher dem Druckmitteleingang 32, 36 zugeordnet ist, ist ein als rohrförmiger Köprer ausgebildeter erster Anker 38 eingeschoben. Ein zweiter, als rohrförmiger Körper ausgebildeter Anker 42, 49 ist in den Bereich des abgestuften Durchlasses 40, 41 eingeschoben, der dem Druckmittelauslaß 47, 51 zugeordnet ist.
Der Druckmitteleingang 32, 36 weist eine Druckmitteleingangskammer und der Druckmittelausgang 47, 51 weist
eine Druckmittelauslaßkammer auf. Der in die Druckmitteleingangskammer hineinragende Teil des ersten Ankers 38
besitzt eine topfförmig ausgebildete Erweiterung, die als
Einlaßventilkörper 34, 37 dient und zusammen mit einer
innerhalb der topfförmig ausgebildeten Erweiterung des
ersten Ankers 38 gelegenen als Einlaßventilsitz dienenden
Keramikkugel ein Einlaßventil 34, 37, 35 bildet. Der
in die Druckmittelauslaßkammer hineinragende Bereich des
zweiten Ankers 42 besitzt ebenfalls eine topfförmig ausgebildete Erweiterung, die als Auslaßventilkörper 49
dient. Der Auslaßventilkörper 49 bildet zusammen mit
einer zweiten Keramikkugel 50 die im Druckmittelauslaß
47, 51 befestigt ist, ein Auslaßventil 49, 50. Die als
Einlaßventilsitz 35 dienende erste Keramikkugel und die
als Auslaßventilsitz 50 dienende zweite Keramikkugel
sind über eine Stange 39 miteinander verbunden. Der
erste Anker 38 wird von einer sich am ersten Deckel 31
abstützenden ersten Feder 33 in Öffnungsrichtung des
Einlaßventils 35, 37 beaufschlagt. Der zweite Anker 42
wird von einer zweiten Feder 48, die sich am zweiten
Deckel 44 abstützt, in Schließrichtung des Auslaßventils 49, 50 beaufschlagt. Im Spulenträger 30 und im
zweiten Deckel 44 sind Kanäle 53, 54 vorgesehen, welche
zu den Druckmittelausgängen 46, 52 führen.

Die Kanäle 53, 54 stehen mit einem im Spulenträger 30
vorgesehenen Ringkanal 55 in Verbindung, der wiederum
mit den in den als rohrförmige Körper ausgebildeten
Ankern 38, 42 vorhandenen Durchlässen 45, 43 verbunden
ist.

Die Funktion des im vorstehenden beschriebenen Mehrwegeventils wird nachfolgend näher erläutert.

Bei stromloser Spule befinden sich das Einlaßventil 37, 35 und das Auslaßventil 49, 50 in der gezeigten Stellung. Das Einlaßventil 37, 35 ist geöffnet und das Auslaßventil 49, 50 befindet sich in der Schließstellung. Durch den Druckmitteleingang 36, 32, das geöffnete Einlaßventil 37, 35, den Durchlaß 45 des ersten Ankers 38 sowie den Ringkanal 55 und die Kanäle 53, 54 strömt Druckmittel zu den Druckmittelausgängen 46, 52. Gleichzeitig steht in dem Durchlaß 43 des zweiten Ankers 42 und somit auch am geschlossenen Auslaßventil 49, 50 Druckmittel an. Der erste Anker 38 und der zweite Anker 42 sind druckentlastet, da die einander entgegengerichteten Wirkflächen eines jeden Ankers 38, 42 so ausgelegt sind, daß sie vom Druckmittel gleichermaßen beaufschlagt werden und sich so die auf die beiden Anker 38, 42 vom Druckmittel ausgeübten Kräfte im Gleichgewicht befinden.

Wird an die Spule 29 ein Teilstrom angelegt, so wird der erste Anker 38 gegen die Kraft der ersten Feder 33 in Richtung auf den ersten Deckel 31 zubewegt, wobei der Einlaßventilkörper 37 auf den Einlaßventilsitz 35 aufsetzt und das Einlaßventil 37, 35 schließt. Da die dem zweiten Anker 42 zugeordnete Feder 48 stärker ausgelegt ist als die dem ersten Anker 38 zugeordnete Feder 33, vermag die Magnetkraft die Kraft der dem zweiten Anker 42 zugeordneten zweiten Feder 48 nicht zu überwinden. Das Auslaßventil 49, 50 bleibt geschlossen. Der Druck in den Verbrauchern wird gehalten. Wird der Strom in der Spule 29 erhöht, so steigt auch die Magnetkraft an. Der zweite Anker 42 wird gegen die Kraft der zweiten Feder 48 in Richtung auf den zweiten Deckel 44 zu bewegt und so der Ventilkörper 49 vom Ventilsitz 50 abgehoben. Das Auslaßventil 49, 50 ist jetzt geöffnet und das Einlaßventil 37, 35 verbleibt weiter in der Schließstellung. Von den Verbrauchern strömt jetzt Druckmittel über die Druckmittelausgänge 46, 52, die Kanäle 53, 54, den Ringkanal 55 sowie den Durchlaß 43 im zweiten Anker 42 zum Druckmittelauslaß 47, 51 und somit zum Rücklauf. Der Druck in den Verbrauchern wird abgebaut.

Wird der Strom in der Spule 29 um einen Teilbetrag reduziert, so verringert sich auch wieder die Magnetkraft. Die Kraft der zweiten Feder 48 überwiegt und bewegt den zweiten Anker 42 in Richtung auf den Auslaßventilsitz 50 zu. Das Auslaßventil 49, 50 schließt.

Da die noch verbleibende Magnetkraft ausreicht, um den ersten Anker 38 zu halten, verbleibt auch das Einlaßventil 37, 35 in der Schließstellung. Einlaßventil 37, 35 und Auslaßventil 49, 50 sind geschlossen, und der Druck in den Verbrauchern wird gehalten.

Wird der Strom von der Spule 29 weggenommen, wird der erste Anker 38 mittels der Kraft der ersten Feder 33 in Richtung vom Einlaßventilsitz 35 weg bewegt. Das Einlaßventil 37, 35 gelangt in die Offenstellung, und es wird wieder Druckmittel in die Verbraucher eingesteuert.

Patentansprüche

1. Elektromagnetisch betätigbares Mehrwegeventil mit wenigstens zwei Ventilen, einer Spule sowie einem ersten Anker, mittels welchem wenigstens das eine Ventil (9, 10) gegen eine erste Rückstellkraft betätigbar ist, gekennzeichnet durch die folgenden Merkmale:

a) Es ist ein zweiter Anker (21) zur Betätigung des anderen Ventils (23, 25) gegen eine von der ersten Rückstellkraft unterschiedlich zweite Rückstellkraft vorgesehen;

b) der erste Anker (5) und der zweite Anker (21) sind derart zu der Spule (2) und derart zueinander angeordnet, daß sie unabhängig voneinander betätigbar sind;

c) die Rückstellkräfte sind so ausgelegt, daß sie unterschiedlichen Magnetkräften angepaßt sind.

2. Elektromagnetisch betätigbares Mehrwegeventil nach Anspruch 1, gekennzeichnet durch die folgenden Merkmale:

a) In einem Ventilgehäuse (1) sind ein erstes Ventil (9, 10) und ein zweites Ventil (23, 25) einander gegenüberliegend angeordnet;

b) dem ersten Ventil (9, 10) ist ein erster Anker (5) zur Betätigung des ersten Ventils (9, 10) und dem zweiten Ventil (23, 25) ist ein zweiter Anker (21) zur Betätigung des zweiten Ventils (23, 25) zugeordnet;

c) es ist eine erste Feder (13) vorgesehen, welche als Rückstellkraft für das erste Ventil (9, 10) dient;

d) es ist eine zweite Feder (18) vorgesehen, welche als Rückstellkraft für das zweite Ventil (23, 25) dient;

e) es ist eine Spule (2) vorgesehen, die zwischen den beiden Ventilen (9, 10, 23, 25) angeordnet ist;

f) die erste Feder (13) und die zweite Feder (18) sind so ausgelegt, daß zur Überwindung der Kraft der ersten Feder (13) und zur Überwindung der Kraft der zweiten Feder (18) unterschiedliche Magnet-Kräfte erforderlich sind;

g) die unterschiedlichen Magnetkräfte werden durch an die Spule (2) anzulegende unterschiedliche Strompegel erzeugt;

h) die beiden Anker (5, 21) und die beiden Ventile (9, 10, 23, 25) sind so zueinander und so zu der Spule (2) angeordnet, daß bei Anlegen eines Teilstromes an die Spule (2) zuerst das eine Ventil (9, 10) und bei Erhöhen des die Spule (2) durchfließenden Stromes das andere Ventil (23, 25) betätigt wird.

3. Elektromagnetisch betätigbares Mehrwegeventil nach wenigstens einem der vorhergehenden Ansprüche, gekennzeichnet durch die folgenden Merkmale:

a) Das erste Ventil ist als Einlaßventil (9, 10) und das zweite Ventil ist als Auslaßventil (23, 25) vorgesehen;

b) die Spule (2) weist einen Spulenträger (15) auf, der an seinen beiden Enden je eine die Stirnseiten der Spule (2) begrenzende Platte (3, 26) aus ferromagnetischem Werkstoff aufweist;

c) der Spulenträger (15) weist einen in Richtung seiner Längsachse verlaufenden Durchlaß (16) auf;

d) die erste Platte (3) begrenzt eine als Druckmitteleingangskammer (11) dienende erste Kammer und die zweite Platte (26) begrenzt eine als Druckmittelausgangskammer (19) dienende zweite Kammer;

e) in der Druckmitteleingangskammer (11) ist ein erster Anker (5) zur Betätigung des Einlaßventils (9, 10) angeordnet und in der Druckmittelausgangskammer (19) ist ein zweiter Anker (21) zur Betätigung des Auslaßventils (23, 25) angeordnet;

f) die Druckmitteleingangskammer (11) und die Druckmittelausgangskammer (19) sind über den im Spulenträger (15) vorgesehenen Durchlaß (16) miteinander verbunden;

g) es ist eine als Rückstellkraft für das Einlaßventil (9, 10) dienende erste Feder (13) vorgesehen, welche den ersten Anker (5) in Öffnungsrichtung des Einlaßventils (9, 10) beaufschlagt;

h) es ist eine als Rückstellkraft für das Auslaßventil (23, 25) dienende zweite Feder (18) vorgesehen, welche den zweiten Anker (21) in Schließrichtung des Auslaßventils (23, 25) beaufschlagt;

1) die zweite Feder (18) ist stärker ausgelegt als die erste Feder (13).

4. Elektromagnetisch betätigbares Mehrwegeventil nach Anspruch 3, dadurch gekennzeichnet, daß der erste Anker (5) und der zweite Anker (21) scheibenförmig ausgebildet sind.

5. Elektromagnetisch betätigbares Mehrwegeventil nach wenigstens einem der vorhergehenden Ansprüche, dadurch gekennzeichnet, daß zwischen den Platten (3, 26) und dem Ventilgehäuse (1) Dichtringe (4, 27) vorgesehen sind, mittels welcher die Spule (2) gegen die Druckmitteleingangskammer (11) und die Druckmittelausgangskammer (19) abgedichtet ist.

6. Elektromagnetisch betätigbares Mehrwegeventil nach wenigstens einem der vorhergehenden Ansprüche, gekennzeichnet durch die folgenden Merkmale:

a) Der erste Anker (38) und der zweite Anker (42) sind als rohrförmige Körper ausgebildet, welche in einem Durchlaß (40, 45) des Spulenträgers (30) geführt sind;

b) sowohl der erste rohrförmige Körper (38) als auch der zweite rohrförmige Körper (42) weisen an ihrem aus dem Durchlaß (40, 45) des Spulenträgers (30) herausgeführten Endbereich je eine topfförmig ausgebildete Erweiterung (34, 37, 49) auf, die als Ventilkörper dienen;

c) innerhalb des topfförmig ausgebildeten Ventilkörpers (34, 37) des ersten rohrförmigen Körpers (38) ist ein Ventilsitz (35) angeordnet, der mit dem Ventilkörper (34, 37) ein in einer Druckmitteleingangskammer gelegenes Einlaßventil (34, 37, 35) bildet;

d) der Ventilkörper (49) des zweiten rohrförmigen Körpers (42) bildet zusammen mit einem in einer Druckmittelauslaßkammer angeordneten Ventilsitz (50) ein als Auslaßventil (49, 50) dienendes Ventil;

e) im Spulenträger(30) ist wenigstens ein zu einem Druckmittelausgang (52, 46) führender Kanal (54, 53) vorgesehen, welcher mit einem ebenfalls im Spulenträger (30) angeordneten Ringkanal (55) verbunden ist;

f) der Ringkanal (55) steht mit den Durchlässen (56, 43) der beiden rohrförmigen Körper (38, 42) in Verbindung;

g) die Druckmitteleingangskammer ist über das Einlaßventil (34, 37, 35), den Durchlaß (56) des ersten rohrförmigen Körpers (38), den Ringkanal (55) und den Kanal (54, 53) mit dem Druckmittelausgang (52, 46) verbindbar;

h) der Druckmittelausgang (52, 46) ist über den Kanal (54, 53), den Ringkanal (55), den Durchlaß (43) des zweiten rohrförmigen Körpers (42) und das Auslaßventil (49, 50) mit dem Druckmittelauslaß (47) verbindbar;

i) es ist eine den Ventilkörper (34, 37) des Einlaßventils (34, 37, 35) in Öffnungsrichtung beaufschlagende erste Feder (33) vorgesehen;

0188673

k) es ist eine den Ventilkörper (49) des Auslaßventils (49, 50) in Schließrichtung des Auslaßventils (49, 50) beaufschlagende zweite Feder
   (48) vorgesehen;

l) die einander entgegengerichteten Wirkflächen sowohl des ersten rohrförmigen Körpers (38, 34, 37)
   als auch des zweiten rohrförmigen Körpers (42, 49)
   sind so ausgelegt, daß sich die auf die rohrförmigen Körper (38, 34, 37, 42, 49) einander entgegengerichtet einwirkenden Kräfte im Gleichgewicht befinden.

FIG. 1

FIG. 2